# EUROPEAN PATENT APPLICATION

(11) **EP 1 764 306 A2**
(43) Date of publication of application: **21.03.2007**
(21) Application number: 06120574.6
(22) Date of filing: 13.09.2006
(51) Int. Cl.: B64D 41/00

(54) **Auxiliary power unit case flange to cone bolt adapter**

(30) Priority: 14.09.2005 US 227673
(71) Applicant: Honeywell International Inc., Morristown, New Jersey 07962 (US)
(72) Inventor: Michalski, Joseph W, Jr, Phoenix, KS 85048 (US); Asplund, Kyle D., Wichita, KS 67209 (US)
(74) Representative: Haley, Stephen

(57) **Abstract**

The present invention provides a fireproof mounting system (106) that is configured to couple an auxiliary power unit ("APU") (100) to a support structure, where the APU (100) includes a case flange (128) having a plurality of spaced apart fastener openings formed therethrough. The mount system (106) comprises a rib (154) and a receptacle (156). The rib (154) has a portion configured to extend substantially parallel to at least a portion of the case flange (128), and includes a plurality of openings (158) formed therethrough and disposed in a pattern such that at least selected ones correspond to one or more of the case flange fastener openings. The receptacle (156) is integrally formed on the rib (154) and has an outer surface (162) and a funnel-shaped inner surface (160). The rib (154) and the receptacle (156) comprise fireproof material.

## Description

The present invention relates to a case flange on an auxiliary power unit and, more particularly, to an adapter that serves as an interface between the case flange and a support structure for the auxiliary power unit.

Auxiliary power units ("APU") are used in aircraft to provide electrical power and compressed air to various aircraft systems during both ground and in flight operations. For example, when an aircraft is on the ground, the APU may provide electrical power to the electrical system, and compressed air to the environmental control systems, air drive hydraulic pumps, and starting air for the main engines.

Typically, an APU is located in the aft section of the aircraft, at or near the tailcone section. The APU may be mounted within the tailcone section via struts that extend between the APU and airframe structure within the tailcone. To minimize the transfer of vibration between the struts and APU, vibration isolators are typically coupled therebetween. In many cases, a vibration isolator has a housing that includes a strut attachment section and a cone bolt end. A cone bolt adapter is used to adapt the cone bolt end for coupling to an APU attachment interface, such as a gearbox pad cone bolt adapter. To meet weight restrictions, at least a portion of the vibration isolator, the APU attachment interface, and parts of the APU are typically constructed from lightweight materials, such as aluminum.

Recently, regulatory authorities have implemented regulations related to improved fire-resistance. To implement these new regulations, many aircraft may need to include more fire-resistant parts. Consequently, various solutions have been proposed to reconfigure various sections of the aircraft, including the above-identified APU mount structure. One of the proposed solutions includes shielding the APU attachment interface with a fireproof material and changing the material from which the APU attachment interface is constructed. However, because the fireproof material typically weighs more than previously used lightweight material, the overall weight of the aircraft may undesirably increase. Additionally, the material change or addition of material may increase the cost of manufacturing the aircraft.

Thus, there is a need for an APU mount system that is fireproof. Additionally, it is desirable for the system to be lightweight. Moreover, it is desirable for the system to be relatively inexpensive to implement.

The present invention provides a mounting system that is configured to couple an auxiliary power unit ("APU") to a cone bolt, where the APU includes a case flange having a plurality of spaced apart fastener openings formed therethrough. The mount system comprises a first rib and a first receptacle. The first rib has a portion configured to extend substantially parallel to at least a portion of the case flange, and includes a plurality of openings formed therethrough and disposed in a pattern such that at least selected ones correspond to one or more of the case flange fastener openings. The first receptacle is integrally formed on the first rib and having an outer surface and a funnel-shaped inner surface. The first rib and the first receptacle comprise fireproof material.

In one embodiment, and by way of example only, a mount adapter is provided that is configured to couple an auxiliary power unit ("APU") to a cone bolt, where the APU includes a case flange having a plurality of spaced apart openings formed therethrough. The mount adapter comprises a first and a second rib and a first receptacle. The first rib has a portion configured to extend substantially parallel to at least a portion of the case flange, and includes a plurality of openings formed therethrough and disposed in a pattern such that at least selected ones correspond to one or more of the case flange fastener openings. The second rib extends substantially parallel to the first rib, and includes a plurality of openings formed therethrough and disposed in a pattern such that at least selected ones correspond to one or more of the case flange fastener openings. The first receptacle is integrally formed between the first and second ribs and has an outer surface and a funnel-shaped inner surface. The first and second ribs and the first receptacle comprise fireproof material.

In another embodiment, and by way of example only, the mount adapter includes a first rib and first and second receptacles. The first rib has a portion configured to extend substantially parallel to at least a portion of the case flange, and includes a first end, a second end, and a plurality of openings formed therethrough. The plurality of openings is disposed in a pattern such that at least selected ones correspond to one or more of the case flange fastener openings. The first receptacle is integrally formed on the first rib first end and has an outer surface and a funnel-shaped inner surface. The second receptacle is integrally formed on the first rib second end and has an outer surface and a funnel-shaped inner surface. The first rib and the first end second receptacles comprise fireproof material.

Other independent features and advantages of the preferred mount system will become apparent from the following detailed description, taken in conjunction with the accompanying drawings which illustrate, by way of example, the principles of the invention.

FIG. 1 is an isometric view of an exemplary auxiliary power unit installed in an aircraft tailcone;

FIG. 2 is an isometric view of an auxiliary power unit on which an exemplary mount adapter is disposed;

FIG. 3 is an isometric view of another exemplary mount adapter;

FIG. 4 is a cross section view of a portion of the exemplary mount adapter shown in FIG. 3;

FIG. 5 is an isometric view of another exemplary mount adapter; and

FIG. 6 is an isometric view of still another exemplary mount adapter.

The following detailed description of the invention is merely exemplary in nature and is not intended to limit the invention or the application and uses of the invention. Although the invention is described below as being implemented between an auxiliary power unit and a vibration isolator, it will be appreciated that the invention may alternatively be used to couple any device having a cone bolt to another device having a case flange. Furthermore, there is no intention to be bound by any theory presented in the preceding background of the invention or the following detailed description of the invention.

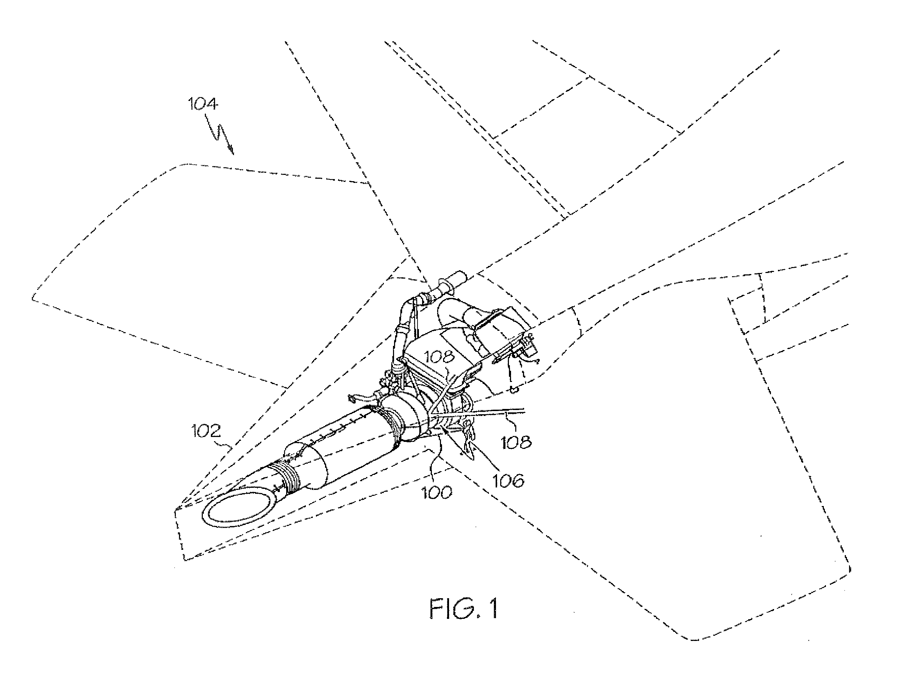

With reference now to FIG. 1, an exemplary auxiliary power unit ("APU") 100 is shown installed in a tailcone 102 of an aircraft 104. The APU 100 is mounted to an aircraft support structure (not shown) via a plurality of struts 108, and an APU mount system 106 within the tailcone 102. It will be appreciated that although the APU is shown in FIG. 1 as including a vibration isolator 136 coupled between the struts 108 and APU mount system 106, alternative embodiments may not include a vibration isolator.

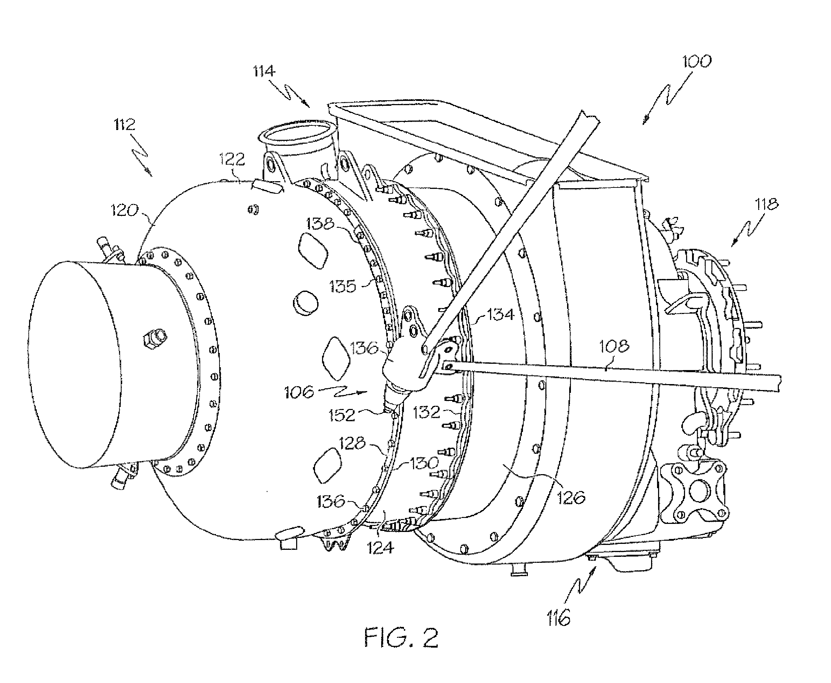

An isometric view of the APU 100 and the APU mount system 106 are provided in FIG. 2. The APU 100 includes a turbine/combustor section 112, a compressor section 114, an accessory gearbox 116, and an accessories section 118. The operation and configuration of each of these sections is generally well-known and will, therefore, not be further discussed. Each APU section is disposed within a housing 120 that itself includes several case sections 322, 324, 125 that are coupled together. Extending radially outward from the ends of each case section 122, 124, 126 are case flanges 128,130,132, 134. The case flanges 128, 130, 132, 134 each include a plurality of fastener openings, which may or may not be threaded. It will be appreciated that fastener openings of two adjacent case flanges, for example flanges 128 and 130 or flanges 132 and 134 are spaced such that they align with each other. Thus, when fasteners 135, such as threaded fastener and nut pairs, are inserted therethrough, the case sections 122, 124, 126 are coupled together.

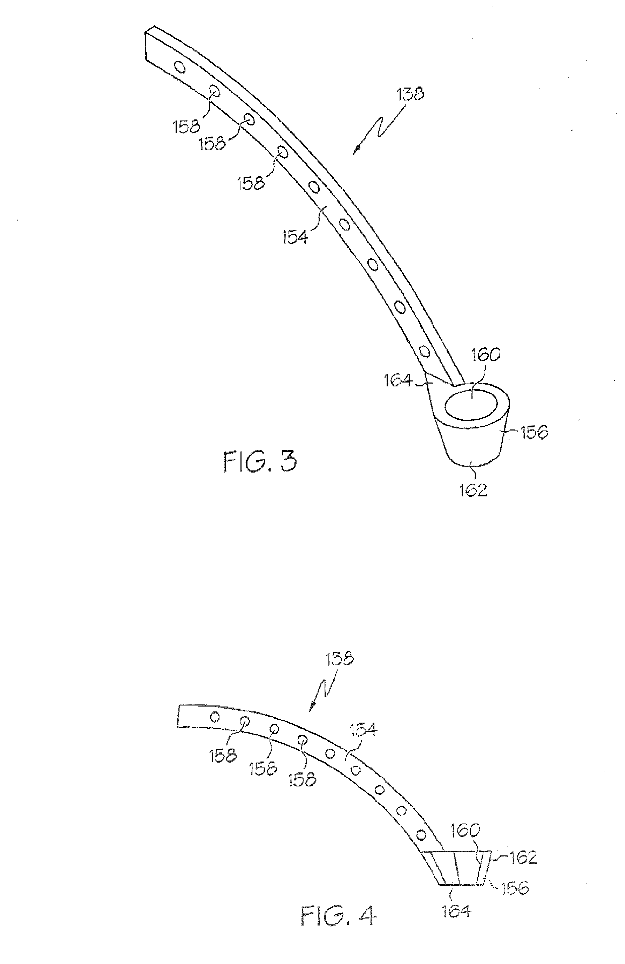

The APU mount system 106 is coupled to at least one of the case flanges (in this embodiment, case flange 128) and includes a case mount adapter 138. FIGs. 3 and 4 are a close-up view and a cross section view of an exemplary case mount adapter 138. The case mount adapter 138 provides a fire-resistant interface between the APU 100 and the vibration isolator 136. In this regard, the case mount adapter 138 is constructed from fire-resistant or fireproof material capable of carrying the loads required to support the APU while exposed to temperatures of up to 2,000°F. Suitable materials include, but are not limited to, stainless steel, nickel-base alloys, or titanium-base alloys. It will be appreciated that any one of numerous other fireproof materials may alternatively be employed.

The case mount adapter 138 is preferably a unitary component including at least one rib 154 and a receptacle 156 that are integrally formed with each other. The rib 154 is configured to mate with one of the case flanges and has a portion thai extends parallel thereto. Additionally, the rib 154 includes a plurality of openings 158 that has a pattern such that at least selected ones correspond with one of the case flange openings.

The receptacle 156 interfaces with the cone bolt 152 and therefore, may have any one of numerous suitable configurations. In one exemplary embodiment, and as shown in FIGs. 3 and 4, the receptacle 156 has an inner surface 160 and an outer surface 162. The inner surface 160 is preferably shaped to receive the cone bolt, and thus, is cone- or funnel-shaped. Although the outer surface 162 is depicted as being beveled, it will be appreciated that the outer surface 162 may alternatively have any other suitable configuration.

The receptacle 156 may be directly coupled to the rib 154, or alternatively may be coupled to the rib 154 via a fireproof gusset 164, as shown in FIG. 3. Although the gusset 164, receptacle 156, and rib 154 are preferably integrally formed with each other, it will be appreciated that other configurations may alternatively be employed. In one exemplary embodiment, the gusset 164 and receptacle 156 are formed separately and subsequently attached together. In another exemplary embodiment, the gusset 164 is integrally formed as part of the rib 154 and subsequently attached to the receptacle 156.

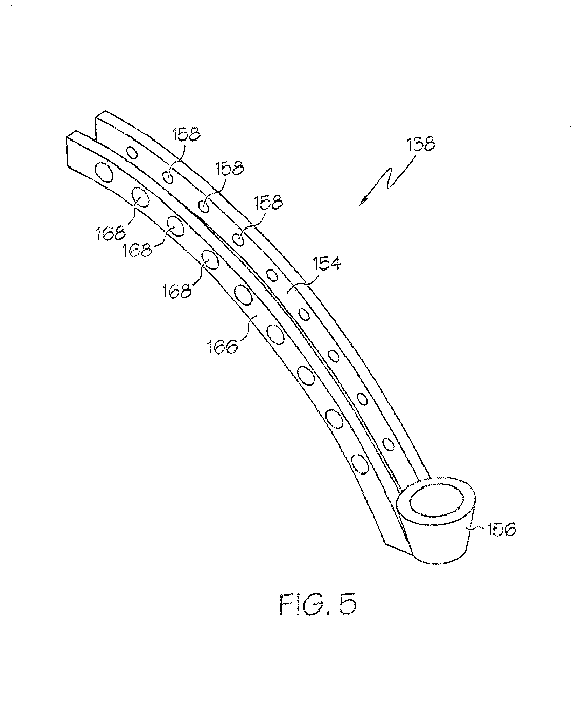

FIG. 5 shows another exemplary case mount adapter 138 that includes a second rib 166. The second rib 166 extends substantially parallel to the first rib 154 and the receptacle 156 is disposed therebetween. Preferably, the second rib 166, first rib 154, and receptacle 156 are integrally formed and thus, the second rib 166 is constructed from fire-resistant or fireproof materials as well. The second rib 166 is suitably spaced apart from the first rib 154 such that a close tolerance fit is provided when case flanges are disposed therebetween. To provide sufficient strength for the case mount adapter 138 when coupled to the strut 108, the ribs 154, 166 are preferably substantially similar in length.

Similar to the first rib 154, the second rib 166 includes a plurality of openings 168 that are disposed in a pattern such that at least selected ones correspond with one of the case flange fastener openings. Preferably, however, the second rib openings 168 are sized larger than the first rib openings 158. In one exemplary embodiment, the second rib openings 168 have a diameter suitable to retain plain bushings (not shown). The bushings may be used for installing the fasteners 135 in the case flanges and for clamping two adjacent case flanges to each other.

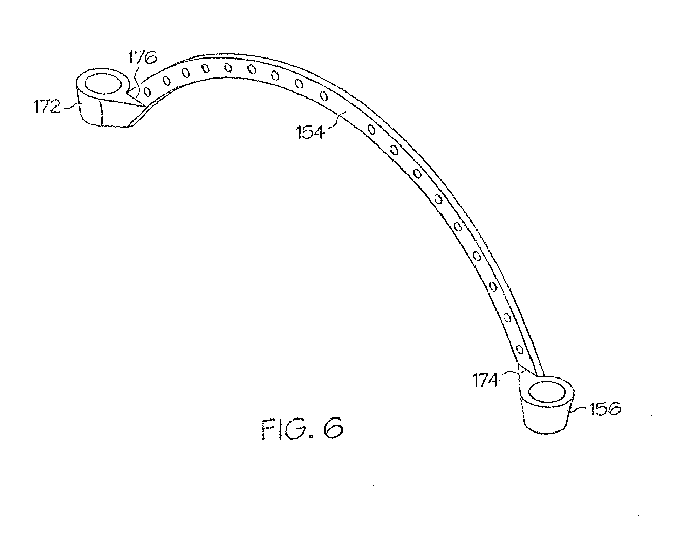

In another exemplary embodiment of the case mount adapter 138, shown in FIG. 6, two receptacles 156,172 are included. As shown in FIG. 5, the rib 154 includes ends 174, 176 to which the receptacles 156, 172 are coupled, respectively. In an alternative embodiment, one or more of the receptacles 156, 172 are disposed between the rib ends 174,176.

A fireproof mounting system has now been provided that is relatively lightweight and easy to install. The system can be configured to be installed on any conventional APU case flange and thus, may be retrofitted into any aircraft.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A mounting system (106) configured to couple an auxiliary power unit ("APU") (100) to a strut, the APU (100) including a case flange (128) having a plurality of spaced apart fastener openings formed therethrough, the mount system comprising:
a first rib (154) having a portion configured to extend substantially parallel to at least a portion of the case flange (128), the first rib (154) including a plurality of openings (158) formed therethrough and disposed in a pattern such that at least selected ones correspond to one or more of the case flange fastener openings; and
a first receptacle (156) integrally formed on the first rib (154) and having an outer surface (162) and a funnel-shaped inner surface (160),
wherein the first rib (154) and the first receptacle (156) comprise fireproof material.

2. The system (106) of claim 1, wherein the fireproof material comprises a material selected from the group consisting of stainless steel, nickel-base alloy, and titanium-base alloy.

3. The system (106) of claim 1, further comprising:
a second rib (166) extending from the first receptacle (156) substantially parallel to the first rib (154), the second rib (166) including a plurality of openings (168) formed therethrough and disposed in a pattern such that at least selected ones correspond to one or more of the case flange fastener openings.

4. The system (106) of claim 3, wherein at least one of the openings of each of the second rib plurality of openings (168) is configured to receive a bushing therein.

5. The system (106) of claim 1, wherein the first rib (154) includes a first end (174) and a second end (176) and the first receptacle (156) is integrally formed on the first rib first end.

6. The system (106) of claim 5, further comprising a second receptacle (172) integrally formed on the first rib second end (176).

7. The system (106) of claim 1, wherein the first rib (154) includes a first end (174) and a second end (176) and the first receptacle (156) is formed between the first and second ends (174, 176).
